Europäisches Patentamt

**European Patent Office**

Office européen des brevets

(19)

(11) Publication number: **0 019 339**
A1

(12)

# EUROPEAN PATENT APPLICATION

(21) Application number: **80200441.6**

(22) Date of filing: **12.05.80**

(51) Int. Cl.³: **F 16 C 33/10**
**F 16 C 17/22**

(30) Priority: **18.05.79 NL 7903916**

(43) Date of publication of application:
**26.11.80 Bulletin 80/24**

(84) Designated Contracting States:
**AT BE DE FR GB NL SE**

(71) Applicant: **N.V. Philips' Gloeilampenfabrieken**
**Pieter Zeemanstraat 6**
**NL-5621 CT Eindhoven(NL)**

(72) Inventor: **Remmers, Gerrit**
**c/o INT. OCTROOIBUREAU B.V. Prof. Holstlaan 6**
**NL-5656 AA Eindhoven(NL)**

(72) Inventor: **Gerkema, Jan**
**c/o INT. OCTROOIBUREAU B.V. Prof. Holstlaan 6**
**NL-5656 AA Eindhoven(NL)**

(72) Inventor: **Tielemans, Leonardus Petrus Maria**
**c/o INT. OCTROOIBUREAU B.V. Prof. Holstlaan 6**
**NL-5656 AA Eindhoven(NL)**

(74) Representative: **Melio, Jan Dirk et al,**
**INTERNATIONAAL OCTROOIBUREAU B.V. Prof.**
**Holstlaan 6**
**NL-5656 AA Eindhoven(NL)**

(54) Hydrodynamic bearing system.

(57) A bearing system, comprising two parts (4), (5) which are rotatable with respect to each other and which have bearing surfaces that cooperate with one another in the radial direction and/or two opposing axial directions at least one bearing surface of each pair of cooperating bearing surfaces being provided with a pattern of shallow lubricant pumping grooves (7), the two rotatable parts being made of materials or material combinations chosen so that, as the temperature rises, the gap between the bearing surfaces becomes smaller due to the different thermal expansion of the relevant parts.

FIG.2

EP 0 019 339 A1

Croydon Printing Company Ltd.

Hydrodynamic bearing system.

The invention relates to a hydrodynamic bearing system, comprising two parts which are rotatable with respect to each other and which have bearing surfaces that cooperate with one another in the radial direction and/or in two opposing axial directions, at least one bearing surface of each pair of cooperating bearing surfaces being provided with a pattern of shallow lubricant pumping grooves.

Hydrodynamic bearing systems of the described kind are known from United States Patent Specifications 34 67 449 (PHN 2111) and 34 97 273 (PHN 2318).

All three important parameters of the known hydrodynamic bearings, i.e. bearing force, stability and friction torque, are directly proportional to the viscosity of the lubricant. The viscosity of the lubricant decreases as the temperature increases; this is disadvantageous for the bearing force and the stability at the operating temperature. The reduced viscosity, however, is favourable for the friction torque, but it also means that the friction torque will be high at the customary cold start, because the viscosity is then high, which is unfavourable for starting. Thus an unfavourable relationship exists between the friction torque at a cold start and the permissible load and stability at the operating temperature.

This unfavourable relationship is even worse in the known bearings because the bearing play increases as the temperature increases, thus strongly reducing the permissible load and stability and somewhat less the friction torque.

The invention has for its object to provide a hydrodynamic bearing system which offers a better relationship between friction torque at a cold start and the permissible load and stability at the operating temperature.

In order to achieve this object, the bearing system in accordance with the invention is characterized in that both rotatable parts are made of materials or material combinations chosen such that, as the temperature rises, the gap between the bearing surfaces becomes smaller due to the different thermal expansion of the relevant parts.

By constructing the bearing system in the described manner, it is achieved that, as the temperature increases, the bearing gap becomes smaller instead of larger. This offers the advantage that in the cold condition the bearing gap may be comparatively large, so that the friction torque is small in the cold condition, whilst at the operating temperature the viscosity of the lubricant decreases, but the bearing gap also decreases, so that a high permissible load and stability are obtained.

A further embodiment of a bearing system in accordance with the invention which comprises two relatively rotatable parts which at least have two bearing surfaces that cooperate with one another in the radial direction is characterized in that both parts are made of metal, at least one of the two cooperating bearing surfaces being provided with a surface layer of a synthetic material having a thermal expansion coefficient which is higher and a modulus of elasticity which is smaller than that of the metal of the relevant part.

In this embodiment, the layer of synthetic material will expand more in reaction to a temperature rise than the metal of the part whereto it is connected. Because the synthetic material can expand only in the direction of the bearing gap, this gap will be reduced.

A further preferred embodiment of a bearing system in accordance with the invention, comprising two relatively rotatable parts which at least have bearing surfaces that cooperate with one another in two opposing axial directions, one of these parts comprising two surfaces which extend transversely of the axis of rotation and which are oriented towards or away from each other, the other part comprising two oppositely situated surfaces which cooperate therewith as bearing surfaces, is characterized in that the two surfaces of the one part which are situated between the two surfaces of the other part are interconnected by at least one structural member of a material having a thermal expansion coefficient which is higher than that of the material of the structural member interconnecting the surfaces of the other part.

For two parts which have bearing surfaces that cooperate with one another in the axial direction it is thus also achieved that the bearing surfaces are situated somewhat nearer to each other when the temperature increases.

The same effect is obtained in a further embodiment in accordance with the invention by providing, also in the case of axially journalled parts, at least one of the bearing surfaces of each pair of cooperating bearing surfaces with a layer of a synthetic material having a thermal expansion coefficient which is higher than that of the material of the two parts journalled with respect to each other.

The invention will be described in detail herinafter with reference to the accomparyning diagrammatic drawing.

Figures 1a and 1b show how the viscosity and the width of the bearing gap vary in general with the temperature.

Figures 2 and 3 show two embodiments of a radial bearing comprising a lining of a synthetic material.

Figures 4, 5, 6 and 7 show embodiments of parts having bearing surfaces that cooperate with one another in the axial direction.

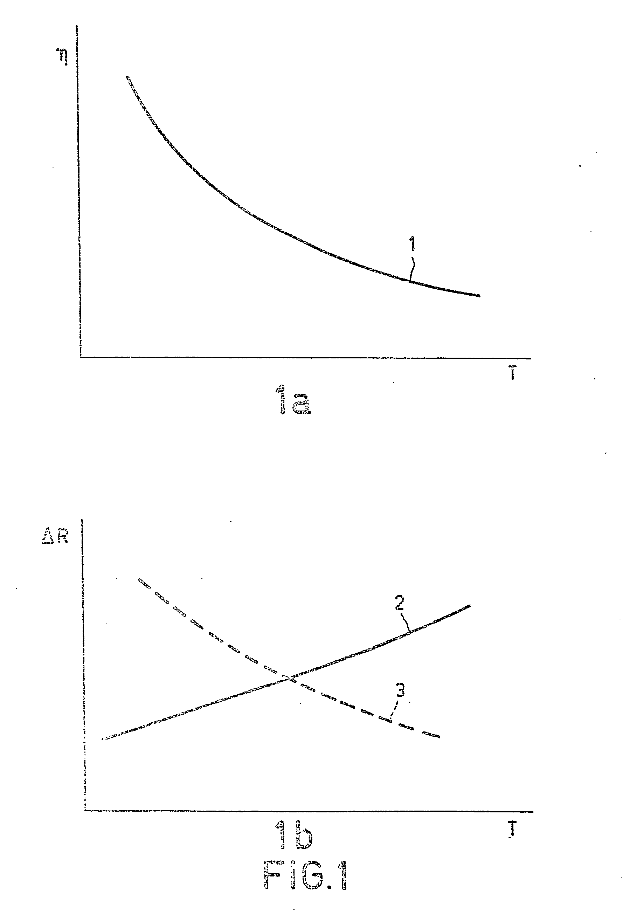

Figure 1a shows how the viscosity $\eta$ of a lubricant generally decreases according to a line 1 as the temperature $\Delta T$ increases.

Figure 1b shows how the dimension $\Delta R$ of a bearing gap generally increases according to the line 2 as the temperature increases.

In hydrodynamic bearings, the permissible load P

is approximately $\frac{n}{\triangle R}2$, the stability is approximately $\frac{n}{\triangle R}3$, and the friction torque W is approximately $\frac{n}{\triangle R}$. It follows there from that an unfavourable relationship exists between permissible load and stability at the operating temperature and the friction torque at a cold start. The former two have to be high at the operating temperature, and the friction torque should be as low as possible at the start. This relationship can be improved by using the basic idea of the invention where the bearing gap does not increase as the temperature rises but rather decreases, for example, according to the line 3 of Figure 1b. In the cold condition the friction torque will then be low, because $\triangle R$, is comparatively large, and permissible load and stability will be high at the operating temperature. How this can be realized from a construction point of view will be illustrated with reference to some embodiments.

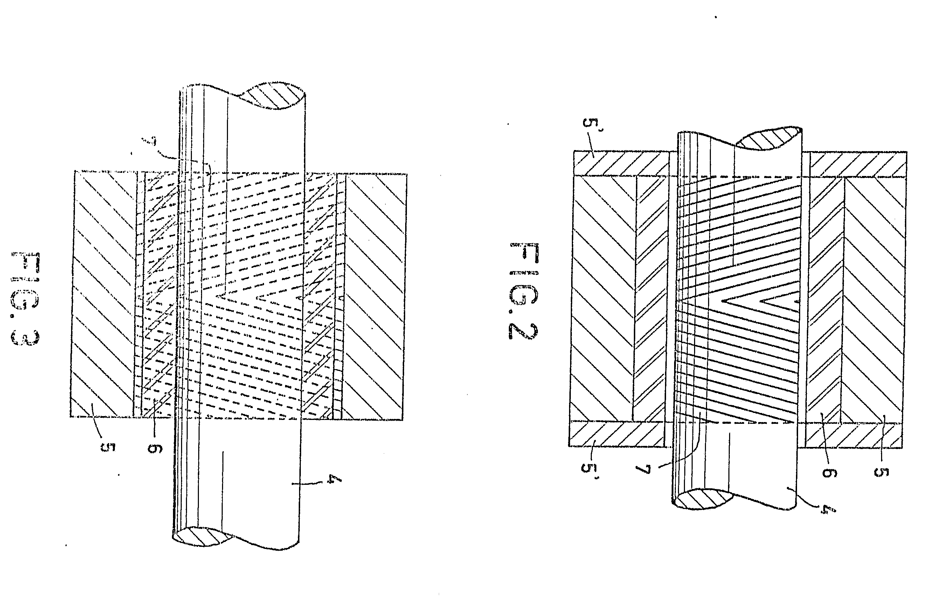

Figure 2 is a sectional view of radial bearing with a shaft 4 and a bearing bush 5. Both are made of metal. The shaft 4 is provided with shallow lubricant pumping grooves 7. The bearing bush 5 is provided with a lining 6 of a different material, for example, a synthetic material having a thermal expansion coefficient which is higher than that of the metal of the bush 5 and also a modulus of elasticity which is smaller than that of the metal. As the temperature increases, the expansion of the material of the lining 6 will exceed that of the metal of the bush 5. The bush 5 prevents radial outwards expansion of the lining 6, so that the expansion of the synthetic material takes place in the direction of the bearing gap, so that the bearing gap becomes smaller, accompanied by the above-mentioned effect. The same effect is obtained by means of the contruction shown in Figure 3. Therein, the lining 6 is not provided in the bush 15, but on the shaft 4. In order to prevent axial expansion of the material of the lining 6 towards the sides, in given circumstances it may be advantageous to provide the bearing with locating pieces 5' as shown in Figure 2.

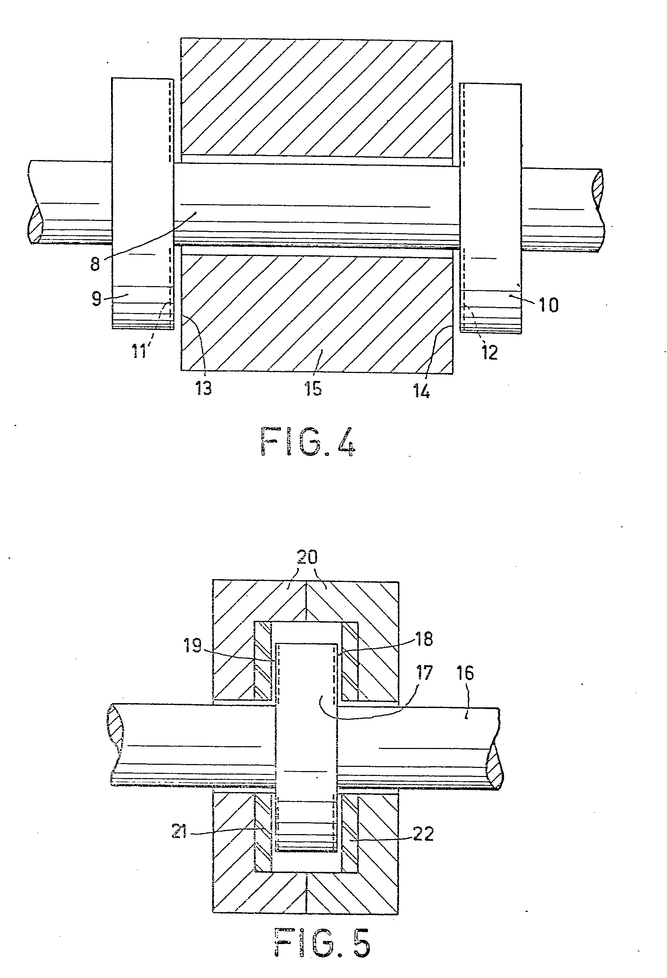

Figure 4 diagrammatically shows a shaft 8 with two flanges 9 and 10. The flanges 9 and 10 comprise bearing surfaces 11 and 12 which are provided with lubricant pumping grooves and which cooperate with bearing surfaces 13 and 14 of a structural member 15. The shaft is made of material, for example, steel having a thermal expansion coefficient which is smaller than that of the material of the structural member 15, for example, aluminium. As a result of this choice of materials, the expansion of the structural member 15 will exceed that of the shaft 8 as the temperature increases, with the result that the bearing gap between the surfaces 11-13 and 12-14 becomes smaller, which again produces the desired effect of high permissible load and stability at the operating temperature and a comparatively small friction torque at a cold start.

If desired, the reduction in the width of the bearing gap as the temperature increases can be further stimulated by providing at least one of the surface 11 or 13 and 12 or 14 with a layer of a synthetic material.

Figure 5 shows a bearing system comprising a shaft 16 provided with a flange 17 which is provided on both sides with a pattern of lubricant pumping grooves 18 and 19. Around the flange 17 there is provided a bearing bush 20 whose surfaces which cooperate with the grooves 18 and 19 are provided with a layer of a synthetic material 21, 22 which has an expansion coefficient which exceeds that of the metal of the other structural members. As the temperature increases, the expansion of the synthetic material will again exceed that of the other parts of the construction, so that the dimension of the bearing gap is reduced.

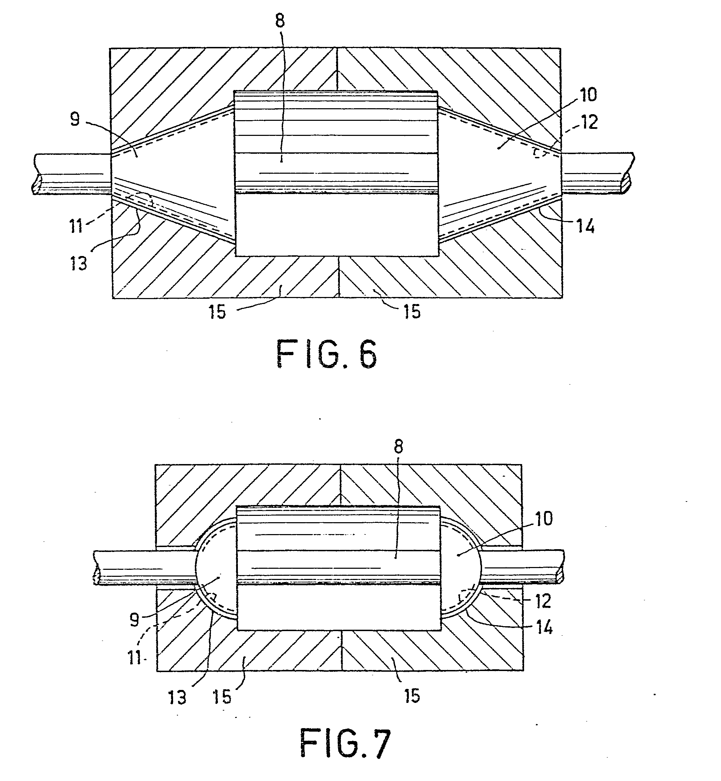

Figures 6 and 7 illustrate how bearings of the type shown in the Figures 4 and 5 can be provided with conical or spherical bearings instead of with straight flanges. Considering the foregoing, the construction of these bearings will be obvious. It is again important that the materials of the shaft and the housing are chosen so that the dimension of the bearing gap decreases as the temperature increases.

PHN 9462                        6

CLAIMS:

1.          A hydrodynamic bearing system, comprising two parts which are rotatable with respect to each other and which have bearing surfaces that cooperate with one another in the radial direction and/or two opposing axial directions at least one bearing surface of each pair of cooperating bearing surfaces being provided with a pattern of shallow lubricant pumping grooves, characterized in that both rotatable parts are made of materials or material combinations chosen such that, as the temperature rises, the gap between the bearing surfaces becomes smaller due to the different thermal expansion of the relevant parts.

2.          A bearing system as claimed in Claim 1, comprising two relatively rotatable parts, such as a shaft and a bearing bush, which have two bearing surfaces that cooperate with one another with respect to each other at least in the radial direction, characterized in that both parts are made of metal, at least one of the two cooperating bearing surfaces being provided with a surface layer of a synthetic material having a thermal expansion coefficient which is higher and a modulus of elasticity which is smaller than that of the metal used for manufacuring the relevant part.

3.          A bearing system as claimed in Claim 1, comprising two relatively rotatable parts which have bearing surfaces that cooperate with one another at least in two opposing axial directions, one of these parts comprising two surfaces which extend transversely of the axis of rotation and which are oriented towards or away from each other, the other part comprising two oppositely situated surfaces which cooperate therewith as bearing surfaces, characterized in that the two surfaces of the one part which are situated between the two surfaces of the other part are interconnected by at least one structural member of a material having a thermal expansion coefficient which is higher than that of the material of the structural member interconnecting the surfaces of the other part.

PHN 9462                              7

4.          A bearing system as claimed in Claim 1 or 3, comprising two relatively rotatable parts which at least have bearing surfaces that cooperate with one another in two opposing axial directions, one of the parts comprising two surfaces which extend transversely of the axis of rotation and which are oriented towards or away from each other, the other part comprising two oppositely situated surfaces which cooperate therewith as bearing surfaces, characterized in that at least one of the bearing surfaces of at least one pair of cooperating bearing surfaces is provided with a layer of a synthetic material having a thermal expansion coefficient which is higher than that of the material of the two structural members.

F/G.

1a

1b

FIG.1

2/4

FIG.2

FIG.3

FIG.4

FIG.5

FIG. 6

FIG.7

0019339

Application number

European Patent Office

**EUROPEAN SEARCH REPORT**

80 ⊔0 0⋯

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | $F16C33/10$ |
| X | US - A - 3 851 933 (JACOBSON) <br> * Column 9, lines 55-60; column 10; claims 1,2,3,9,10 * | 1,2,4 | |
| | CH - A - 318 272 (ALUMINIUM FR) <br> * Entirely * | 1 | |
| A | GB - A - 1 000 355 (UK ATOMIC) | | |
| A | GB - A - 1 330 079 (DORNIER) | | |
| A | US - A - 2 318 114 (TICHVINSKY) | | TECHNICAL FIELDS SEARCHED (Int.Cl. 3) |
| A | FR - A - 2 129 797 (LAING) | | |
| A | DE - A - 2 636 507 (CONRADTY) | | F 16 C |
| A | FR - A - 2 120 401 (C.E.A.) | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 08-08-1980 | CAILLIED |

EPO Form 1503.1 08.78